# EUROPÄISCHE PATENTSCHRIFT

(11) **EP 1 989 519 B1**
(45) Veröffentlichungstag und Bekanntmachung des Hinweises auf die Patenterteilung: **16.11.2016**
(21) Anmeldenummer: 07702863.7
(22) Anmeldetag: 18.01.2007
(51) Int. Cl.: G01F 23/284

(54) **POTENTIALTRENNUNG FÜR EIN FÜLLSTANDRADAR**
POTENTIAL SEPARATION FOR A FILL LEVEL RADAR
SEPARATION DE POTENTIEL POUR UN RADAR DE DETECTION DE NIVEAU DE REMPLISSAGE

(30) Priorität: 27.01.2006 US 763020 P; 04.04.2006 US 789227 P; 04.04.2006 DE 102006015659
(43) Veröffentlichungstag der Anmeldung: 12.11.2008
(73) Patentinhaber: VEGA Grieshaber KG, 77709 Wolfach (DE)
(72) Erfinder: GRIESSBAUM, Karl, 77796 Mühlenbach (DE); MOTZER, Jürgen, 77723 Gengenbach (DE); DECK, Thomas, 77709 Wolfach (DE); FEHRENBACH, Josef, 77716 Haslach (DE); RAUER, Winfried, 77716 Fischerbach (DE)
(74) Vertreter: Maiwald Patentanwalts GmbH
(86) Internationale Anmeldenummer: PCT/EP2007/000424
(87) Internationale Veröffentlichungsnummer: WO 2007/085376

(56) Entgegenhaltungen:
- EP-A1- 1 108 992
- WO-A-02/057723
- WO-A-2005/031481
- WO-A-2005/086110
- US-A- 4 737 791
- US-A- 5 706 007
- US-A1- 2002 154 052
- US-A1- 2004 100 281

## Beschreibung

### Technisches Gebiet

Die vorliegende Erfindung betrifft die Füllstandmessung. Insbesondere betrifft die vorliegende Erfindung ein Füllstandradar mit Potentialtrennung zur Messung eines Füllstands in einem Behälter und zum Anschluss an eine Zweileiterschleife, und ein Verfahren zum Messen eines Füllstands.

### Hintergrund der Erfindung

Bekannte Füllstandmessgeräte weisen neben einer Antenne zum Aussenden bzw. Empfangen von Radar- oder Mikrowellen eine Elektronik-Einheit auf, welche die auszusendenden Signale erzeugt und die empfangenen Signale auswertet.

Weiterhin kann eine Potentialtrennung vorgesehen sein. Das Potential der elektrischen Versorgungsleitung eines Radarsensors sollte aus messtechnischen Erwägungen und aus Sicherheitsgründen getrennt vom Potential des, oft metallischen, Füllgutbehälters sein. Dies kann beispielsweise zu einer Reduktion von Rauscheffekten bei der Messung und zu einer Verringerung der Störanfälligkeit der Messsignale führen. Weiterhin führt eine solche Isolierung zu einer erhöhten Sicherheit, beispielsweise hinsichtlich der Vermeidung von Bränden, welche als Folge eines Kurzschlusses oder eines Defekts in der elektrischen Versorgung oder der Elektronik des Füllstandradars auftreten können. So könnte ein ungewollter Funkenschlag beispielsweise zur Entzündung oder Beschädigung des Füllguts führen.

Diese Potentialtrennung kann im Mikrowellenpfad vorgesehen sein. Allerdings können sich hierbei Signalbeeinträchtigungen des Mikrowellen-Sende- und Empfangssignals in Form von Signaldämpfung oder Reflexionen durch Fehlanpassung ergeben. Gerade bei sehr hohen Mikrowellenfrequenzen ist die Ausführbarkeit erschwert, weil diskrete Bauteile zur Trennung nicht verfügbar sind und Leitungselemente durch ihre geringen Abmessungen nur mit hohem Aufwand mit reproduzierbar guten Eigenschaften hergestellt werden können.

US 6,956,382 offenbart eine Potentialtrennung, welche außerhalb der Elektronik-Einheit zwischen Zweileiterschleife und Ausgabeschaltung angeordnet ist. Die Regelung des Schleifenstroms der Ausgabeschaltung ist hier durch die Potentialtrennung von der Zweileiterschleife abgetrennt.

Da bei Sensoren mit 4...20mA Zweileiteranschluss der Strom auf der Zweileiterschleife durch die Ausgabeschaltung geregelt werden muss, aber gleichzeitig eine Potentialtrennung zwischen Zweileiterschleife und Ausgabeschaltung einzuhalten ist, müssen auch solche Signale über die nichtleitende Trennstelle übertragen werden, welche sich für eine Übertragung über eine derartige Trennstelle weniger gut eignen. Hierbei handelt es sich zum einen um das Stromfühlsignal (der Istwert der Regelung) und zum anderen um das Stellsignal des Reglers. Beide Signale sind üblicherweise analoge Gleichspannungssignale, bei dem Stromfühlsignal ist außerdem die exakte Übertragung des Amplitudenwertes notwendig. Dies ist nicht mit einfachen Optokopplern möglich. Deshalb ist der Aufwand für die Potentialtrennung zwischen Ausgabeschaltung und Zweileiterschleife relativ hoch.

EP 1 108 992 A1 beschreibt ein Verfahren zum Betrieb eines Füllstandmessgeräts und ein Füllstandmessgerät. Das Füllstandmessgerät weist einen Messsensor und einen daran angeschlossenen Messwertwandler auf. Der Messwertwandler ist über zwei Optokoppler und eine dazwischen angeordnete Glasfaser mit einer elektronischen Auswerteeinrichtung verbunden. Neben der Datenübertragung ist auch die Übertragung der Versorgungsspannung galvanisch entkoppelt.

US 4,737,791 beschreibt ein Radarfüllstandmessgerät mit einer Sicherheitsbarriere, welche sich zwischen der Spannungsversorgung und anderen Komponenten des Füllstandmessgeräts befindet.

### Darstellung der Erfindung

Es ist eine Aufgabe der vorliegenden Erfindung, eine verbesserte Potentialtrennung für ein Mikrowellen-Füllstandradar in Zweileitertechnik anzugeben.

Gemäß der vorliegenden Erfindung ist ein Füllstandradar mit Potentialtrennung zur Messung eines Füllstands in einem Tank und zum Anschluss an eine Zweileiterschleife angegeben, das Füllstandradar umfassend eine Elektronik-Einheit zum Erzeugen eines Sendesignals, zum Empfangen und Auswerten eines Empfangssignals, und zum Erzeugen und Ausgeben eines Ausgabesignals, das auf dem ausgewerteten Empfangssignal basiert und welches den Füllstand repräsentiert, und eine Potentialtrennung innerhalb der Elektronik-Einheit zur galvanischen Trennung von ersten Signalen in einem ersten Bereich der Elektronik-Einheit von zweiten Signalen in einem zweiten Bereich der Elektronik-Einheit, wobei die Elektronik-Einheit eine Ein- und Ausgabeschaltung aufweist, welche zum Regeln und Ausgeben des Ausgabesignals ausgeführt ist und in dem ersten Bereich angeordnet ist, und wobei die Erzeugung des Sendesignals in dem zweiten Bereich erfolgt.

Somit weist das erfindungsgemäße Füllstandradar eine Potentialtrennung auf, welche sich innerhalb der Elektronik befindet. Hierbei kann die Trennlinie, welche durch die Potentialtrennung definiert wird, durch digitale Signalverbindungen oder Wechselspannungs-Signalverbindungen führen.

Auf diese Weise werden digitale Signale oder gleichspannungsfreie Wechselsignale getrennt.

Gemäß einem weiteren Ausführungsbeispiel der vorliegenden Erfindung ist die Einund Ausgabeschaltung zum Entgegennehmen von externen Eingabesignalen ausgeführt.

Die Eingabesignale können beispielsweise über die Zweileiterschleife übertragen werden und dienen beispielsweise der Konfiguration der Elektronik-Einheit oder aber auch der Energieversorgung. Die Entgegennahme der externen Eingabesignale kann, gemäß einem anderen Ausführungsbeispiel der vorliegenden Erfindung, auch über eine manuelle Eingabe erfolgen, oder aber auch berührungslos über ein Funksignal oder ein anderes Signal (beispielsweise ein akustisches Signal).

Gemäß einem weiteren Ausführungsbeispiel der vorliegenden Erfindung ist die Ein-und Ausgabeschaltung zur Regelung eines Ausgangsstroms der Zweileiterschleife ausgeführt.

Auf diese Weise können die Messwerte über die Zweileiterstromschleife übertragen werden. Der "Istwert" der Regelung wird hierbei von der Zweileiterschleife an die Ein- und Ausgabeschaltung abgegeben und muss nicht über die Potentialtrennung übertragen werden.

Gemäß einem weiteren Ausführungsbeispiel der vorliegenden Erfindung ist das Ausgabesignal ein digitales Ausgabesignal, wobei die Ein- und Ausgabeschaltung zur Modulation des digitalen Ausgabesignals und zur Demodulation eines digitalen Eingangssignals ausgeführt ist.

Gemäß der vorliegenden Erfindung umfasst die Elektronik-Einheit weiterhin eine Spannungsversorgung zum Versorgen der Ein- und Ausgabeschaltung (erste Elektronikkomponente) der Elektronik-Einheit mit einem ersten Betriebssignal und einer zweiten Elektronikkomponente der Elektronik-Einheit mit einem zweiten Betriebssignal, wobei die Potentialtrennung zum Trennen des ersten Betriebssignals von dem zweiten Betriebssignal innerhalb der Spannungsversorgung ausgeführt ist.

Somit trennt die Potentialtrennung nicht nur die Ein- und Ausgabeschaltung von der Sendesignalerzeugung, sondern auch verschiedene Bereiche der Spannungsversorgung voneinander. Auf diese Weise wird eine durchgängige Potentialtrennung innerhalb der Elektronik-Einheit bereitgestellt, welche verschiedene Funktionsbereiche der Elektronik-Einheit inklusive deren Energieversorgung voneinander trennt.

Gemäß einem weiteren Ausführungsbeispiel der vorliegenden Erfindung umfasst die Potentialtrennung eine induktive Trennung innerhalb der Spannungsversorgung.

Auch sind innerhalb der Spannungsversorgung andere Arten der Trennung möglich, wie beispielsweise eine kapazitive Trennung.

Gemäß einem weiteren Ausführungsbeispiel der vorliegenden Erfindung umfasst die Elektronik-Einheit weiterhin eine Auswerteschaltung zum Auswerten des Empfangssignals.

Das Empfangssignal kann hierbei ein digitalisiertes Empfangssignal sein, oder aber auch ein analoges.

Die Auswertung des Empfangssignals umfasst, gemäß einem weiteren Ausführungsbeispiel der vorliegenden Erfindung, eine Identifikation eines Füllgutechos und eine Bereitstellung eines digitalisierten Füllstandwertes an die Einund Ausgabeschaltung. Auch kann das Auswerten des Empfangssignals eine Vermessung der Füllgutentfernung umfassen.

Gemäß einem weiteren Ausführungsbeispiel der vorliegenden Erfindung umfasst die Elektronik-Einheit weiterhin einen Sender zur Erzeugung des Sendesignals.

Der Sender kann als Mikrowellen-Sendeschaltung ausgeführt sein. Weiterhin kann der Sender eine Taktschaltung, Oszillatoren, Modulationsschaltungen und/oder Sendeverstärker umfassen.

Gemäß einem weiteren Ausführungsbeispiel der vorliegenden Erfindung umfasst die Elektronik-Einheit weiterhin einen Empfänger zum Empfangen des Messsignals. Der Empfänger kann, gemäß einem weiteren Ausführungsbeispiel der vorliegenden Erfindung, als Mikrowellen-Empfangsschaltung ausgeführt sein.

Weiterhin kann der Empfänger einen Empfangsverstärker, einen Mischer, Taktschaltungen, Oszillatoren, Filter, Zwischenfrequenzverstärker, Demodulator, Logarithmierer und/oder Analog/Digital-Wandler umfassen.

Gemäß einem weiteren Ausführungsbeispiel der vorliegenden Erfindung umfasst die Spannungsversorgung zumindest ein Element ausgewählt aus der Gruppe bestehend aus DC-DC-Wandler, Filter, Spannungsregler und Speicherkondensator.

Der DC-DC-Wandler ist beispielsweise mit einer induktiven Trennung innerhalb der Spannungsversorgung ausgeführt.

Gemäß einem weiteren Ausführungsbeispiel der vorliegenden Erfindung ist die Potentialtrennung zur Trennung digitaler Signale ausgeführt.

Digitale Signale sind einfach zu trennen. Der zu betreibende Aufwand für die Potentialtrennung von digitalen Signalen ist deutlich geringer als der entsprechende Aufwand, welcher für die Trennung von analogen Signalen betrieben werden müsste.

Gemäß einem weiteren Ausführungsbeispiel der vorliegenden Erfindung ist die Potentialtrennung zur Trennung gleichspannungsfreier Wechselsignale ausgeführt.

Auch die Trennung gleichspannungsfreier Wechselsignale ist einfach im Vergleich zur Trennung analoger Gleichspannungssignale.

Gemäß einem weiteren Ausführungsbeispiel der vorliegenden Erfindung erfolgt die Potentialtrennung innerhalb der Auswerteschaltung.

Die Auswerteschaltung umfasst hier beispielsweise zwei Mikroprozessoren oder Mikrocontroller, welche über Optokoppler oder (induktiver) Übertrager oder einer kapazitiven Kopplung mit Kondensatoren in Hin- und Rückleitung voneinander getrennt sind. Die Auswerteschaltung ist hierbei zur Signalauswertung ausgeführt und erhält ein Echoprofil, woraus dann der auszugebende Messwert gebildet wird.

Gemäß einem weiteren Ausführungsbeispiel der vorliegenden Erfindung erfolgt die Übergabe des Füllstandmesswerts direkt von dem zweiten Mikrocontroller (der sich im zweiten Bereich befindet) über die Potentialtrennung (beispielsweise durch einen Optokoppler) direkt zu einem Stromregler der Ein- und Ausgabeschaltung. Hierdurch wird der erste Mikroprozessor (welcher sich im ersten Bereich der Elektronik-Einheit befindet) umgangen. Somit ist auch bei Fehlfunktion des ersten Mikroprozessors eine sichere Übertragung von Signalen vom zweiten Mikroprozessor zum Stromregler der Ein- und Ausgabeschaltung gewährleistet.

Gemäß einem weiteren Ausführungsbeispiel der vorliegenden Erfindung erfolgt die Potentialtrennung zwischen der Auswerteschaltung, die im ersten Bereich angeordnet ist, auf der einen Seite und dem Empfänger, der im zweiten Bereich angeordnet ist, auf der anderen Seite.

Somit befinden sich nicht nur die Ein- und Ausgabeschaltung, sondern auch die Auswerteschaltung im ersten Bereich, also auf der der Zweileiterschleife zugewandten Seite der Elektronik-Einheit.

Gemäß einem weiteren Ausführungsbeispiel der vorliegenden Erfindung erfolgt die Potentialtrennung innerhalb des Empfängers.

Beispielsweise wird hierbei das Zwischenfrequenz(ZF)-Signal getrennt, bei dem es sich um ein gleichspannungsfreies Wechselspannungssignal handelt. Die Trennung erfolgt beispielsweise durch Kondensatoren.

Gemäß einem weiteren Ausführungsbeispiel der vorliegenden Erfindung umfasst die Potentialtrennung einen Optokoppler.

Gemäß einem weiteren Ausführungsbeispiel der vorliegenden Erfindung ist das Füllstandradar zum Anschluss an eine Zweileiterschleife zum Versorgen des Füllstandmessgeräts mit Energie und zur Ausgabe der Ausgabesignale auf einem einzigen Leitungspaar ausgeführt.

Bei der Zweileiterschleife kann es sich beispielsweise um eine 4...20mA ZweileiterStromschleife handeln.

Gemäß einem weiteren Ausführungsbeispiel der vorliegenden Erfindung ist ein Verfahren zum Messen eines Füllstands angegeben, bei dem die folgenden Schritte ausgeführt werden:
Erzeugen eines Sendesignals, Empfangen und Auswerten eines Empfangssignals, Erzeugen und Ausgeben eines Ausgabesignals, das auf dem ausgewerteten Empfangssignal basiert, welches den Füllstand repräsentiert, Trennen von ersten Signalen in einem ersten Bereich der Elektronik-Einheit von zweiten Signalen in einem zweiten Bereich der Elektronik-Einheit durch eine Potentialtrennung innerhalb der Elektronik-Einheit, und Regeln und Ausgeben des Ausgabesignals durch eine Ein- und Ausgabeschaltung, welche in dem ersten Bereich angeordnet ist, wobei das Erzeugen des Sendesignals in dem zweiten Bereich erfolgt.

Gemäß einem weiteren Ausführungsbeispiel der vorliegenden Erfindung umfasst das Verfahren weiterhin ein Entgegennehmen von externen Eingabesignalen, und ein Regeln eines Ausgangsstroms einer Zweileiterschleife durch die Ein- und Ausgabeschaltung.

Weiterhin kann die Ein- und Ausgabeschaltung zur Modulation eines digitalen Ausgabesignals und zur Demodulation eines digitalen Eingangssignals ausgeführt sein.

Hierdurch wird ein Verfahren bereitgestellt, welches eine einfache Trennung von Signalen innerhalb der Elektronik-Einheit gewährleistet. Bei den zu trennenden Signalen handelt es sich beispielsweise um digitale Signale oder gleichspannungsfreie Wechselsignale.

Weitere Ausführungsbeispiele und Vorteile der Erfindung ergeben sich aus den Unteransprüchen.

### Kurze Beschreibung der Zeichnungen

Im Folgenden werden mit Verweis auf die Figuren bevorzugte Ausführungsbeispiele der vorliegenden Erfindung beschrieben.
Fig. 1A zeigt eine schematische Darstellung eines Füllstandradars mit einer Potentialtrennung im Mikrowellenpfad.
Fig. 1B zeigt eine schematische Darstellung eines Füllstandradars mit einer Potentialtrennung zwischen Zweileiterschleife und Elektronik-Einheit.
Fig. 2 zeigt eine schematische Darstellung eines Füllstandradars gemäß mehrerer Ausführungsbeispiele der vorliegenden Erfindung.
Fig. 3 zeigt eine schematische Darstellung eines Füllstandradars gemäß einem Ausführungsbeispiel der vorliegenden Erfindung.
Fig. 4A zeigt eine schematische Darstellung eines Füllstandradars gemäß einem Ausführungsbeispiel der vorliegenden Erfindung.
Fig. 4B zeigt eine schematische Darstellung eines Füllstandradars gemäß einem weiteren Ausführungsbeispiel der vorliegenden Erfindung.
Fig. 5 zeigt eine schematische Darstellung eines Füllstandradars gemäß einem weiteren Ausführungsbeispiel der vorliegenden Erfindung.
Fig. 6 zeigt eine schematische Darstellung eines Füllstandradars gemäß einem weiteren Ausführungsbeispiel der vorliegenden Erfindung.
Fig. 7 zeigt ein Blockschaltbild der Potentialtrennung der Fig. 3.
Fig. 8 zeigt ein Blockschaltbild der Fig. 3 gemäß einem weiteren Ausführungsbeispiel der vorliegenden Erfindung.
Fig. 9 zeigt ein Blockschaltbild einer Potentialtrennung der Fig. 3 gemäß einem weiteren Ausführungsbeispiel der vorliegenden Erfindung.
Fig. 10 zeigt ein weiteres Blockschaltbild der Fig. 3 gemäß einem weiteren Ausführungsbeispiel der vorliegenden Erfindung.
Fig. 11 zeigt ein Blockschaltbild einer Potentialtrennung der Fig. 3 gemäß einem weiteren Ausführungsbeispiel der vorliegenden Erfindung.
Fig. 12 zeigt ein Blockschaltbild der Fig. 3 gemäß einem weiteren Ausführungsbeispiel der vorliegenden Erfindung.
Fig. 13 zeigt ein Blockschaltbild der Fig. 3 gemäß einem weiteren Ausführungsbeispiel der vorliegenden Erfindung.
Fig. 14 zeigt ein Blockschaltbild einer Potentialtrennung der Fig. 4 gemäß einem Ausführungsbeispiel der vorliegenden Erfindung.
Fig. 15 zeigt ein Blockschaltbild einer Potentialtrennung der Fig. 5 gemäß einem Ausführungsbeispiel der vorliegenden Erfindung.
Fig. 16 zeigt ein Blockschaltbild einer Potentialtrennung der Fig. 6 gemäß einem Ausführungsbeispiel der vorliegenden Erfindung.

Die Darstellungen in den Figuren sind schematisch und nicht maßstäblich.

### Detaillierte Beschreibung von exemplarischen Ausführungsformen

In der folgenden Figurenbeschreibung werden für die gleichen oder ähnlichen Elemente die gleichen Bezugsziffern verwendet.

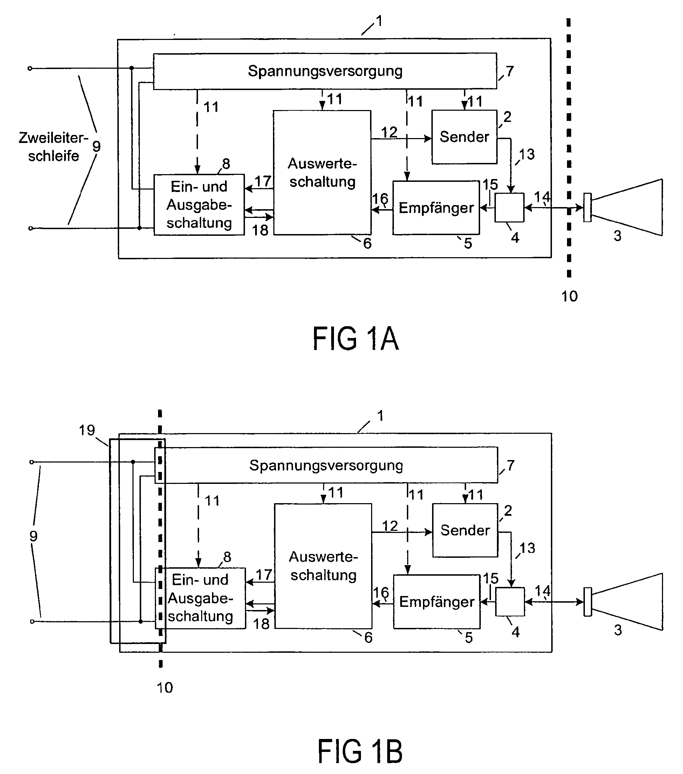

Fig. 1A zeigt eine schematische Darstellung eines Füllstandradars mit einer Potentialtrennung 10 im Mikrowellenpfad 14. Das Füllstandradar umfasst hierbei eine Elektronik-Einheit 1, welche an einer Zweileiterschleife 9 angeschlossen ist. Die Elektronik-Einheit 1 enthält eine Spannungsversorgung 7 mit einem DC-DC-Wandler, einem oder mehreren Filtern, einem oder mehreren Spannungsreglern und einem oder mehreren Speicherkondensatoren. Weiterhin umfasst die Elektronik-Einheit 1 eine Ein- und Ausgabeschaltung 8, eine Auswerteschaltung 6, einen Sender 2, einen Empfänger 5 und eine Schaltung zur Trennung von Sende- und Empfangsweg 4, welche beispielsweise einen Richtkoppler oder einen Zirkulator umfasst.

Die Spannungsversorgung 7 ist über die Leitungen 11 mit der Ein- und Ausgabeschaltung 8, der Auswerteschaltung 6, dem Sender 2 und dem Empfänger 5 verbunden und versorgt diese Einheiten mit Energie.

Der Sender 2 erzeugt ein Sendesignal 13, welches an die Schaltung zur Trennung von Sende- und Empfangsweg 4 weitergegeben wird. Über den Mikrowellenpfad 14 wird das Sendesignal dann an die Antenne 3 übertragen, welche das Signal zum Füllgut abstrahlt und ein entsprechendes Empfangssignal empfängt, welches ebenfalls über die Mikrowellenleitung 14 an den Richtkoppler 4 übertragen wird. Das Empfangssignal wird dann über Mikrowellenleitung 15 an den Empfänger 5 weitergegeben, der das Signal daraufhin über Leitung 16 an die Auswerteschaltung 6 überträgt.

Die Leitung 16 ist zur Übergabe des Empfänger-Ausgangssignals an die Auswerteschaltung 6 ausgeführt. Beispielsweise handelt es sich hierbei um digitale Signale, wenn die Empfangsschaltung 5 einen entsprechenden Analog/DigitalWandler umfasst.

Die Auswerteschaltung 6 ist über Leitung 17 zur Übergabe des Füllstandmesswerts (ausgewertetes Empfangssignal) an die Ein- und Ausgabeschaltung 8 angeschlossen. Ebenso ist die Ein- und Ausgabeschaltung 8 über die Leitungen 18 zur internen Übertragung von digitalen Kommunikationssignalen an die Auswerteschaltung 6 angeschlossen.

Bei den Leitungen 13, 14, 15 kann es sich beispielsweise um Mikrowellenleitungen handeln.

Der Sender 2 ist beispielsweise als Mikrowellen-Sendeschaltung ausgeführt und enthält beispielsweise Taktschaltungen, Oszillatoren, Modulationsschaltungen und/oder Sendeverstärker.

Bei der Antenne 3 handelt es sich beispielsweise um eine Horn-, Stab-, Patch- oder Parabolantenne. Bei leitungsgeführter Mikrowellen-Füllstandmessung kann anstelle der Antenne ein Wellenleiter, z. B. ein Stahlseil, vorhanden sein.

Bei der Schaltung 4 zur Trennung von Sende- und Empfangsweg handelt es sich beispielsweise um einen Richtkoppler oder um einen Zirkulator.

Der Empfänger 5 kann beispielsweise als Mikrowellen-Empfangsschaltung mit Empfangsverstärker, Mischer, Taktschaltungen, Oszillatoren, Filter, Zwischenfrequenzverstärker, Demodulator, Logarithmierer und/oder A/D-Wandler ausgeführt sein.

Die Auswerteschaltung 6 dient der Auswertung des digitalisierten Empfangssignals, der Identifikation des Füllgutechos, der Vermessung der Füllgutentfernung und der Bereitstellung eines digitalen Füllstandwerts.

Die Zweileiterschleife 9 dient der Versorgung des Sensors und der Messwertausgabe auf einem einzelnen Leitungspaar, und ist beispielsweise als 4...20mA Zweileiter-Stromschleife ausgeführt.

Die Leitung 12 dient der Aktivierung der Sendeschaltung 2 durch die Auswerteschaltung 6.

Ist die Potentialtrennung 10 in der Mikrowellenleitung 14 oder in einer Mikrostripleitung zwischen dem Hybridkoppler 4 (oder Zirkulator 4) und der Antenne 3 angeordnet, können Verluste aufgrund einer mangelhaften Anpassung auftreten.

Fig. 1B zeigt eine schematische Darstellung eines Füllstandradars mit einer Potentialtrennung 10 zwischen der Zweileiterschleife 9 und der Ein- und Ausgabeschaltung 8. Eine derartige Potentialtrennung ist in US 6,956,382 offenbart.

Es ist eine Isolationsschaltung 19 vorgesehen, welche eine Potentialtrennung zwischen der Zweileiterschleife 9 einerseits und der Spannungsversorgung 7 und Ausgabeschaltung 8 bereitstellt. Wesentliches Bestandteil der Ausgabeschaltung 8 ist ein Regelelement zur Regelung des Ausgangsstroms der 4...20mA Zweileiter-Stromschleife 9 auf Basis eines entsprechenden Sollwertes. Das geregelte analoge Signal muss dann über die Potentialtrennung 10 an die Zweileiterschleife 9 übertragen werden. Ebenso muss der Istwert der Regelung von der Zweileiterschleife über die Potentialtrennung 10 an die Ein- und Ausgabeschaltung 8 übertragen werden.

Hierbei handelt es sich um analoge Signale, deren Übertragung über eine derartige Potentialtrennung aufwändig ist.

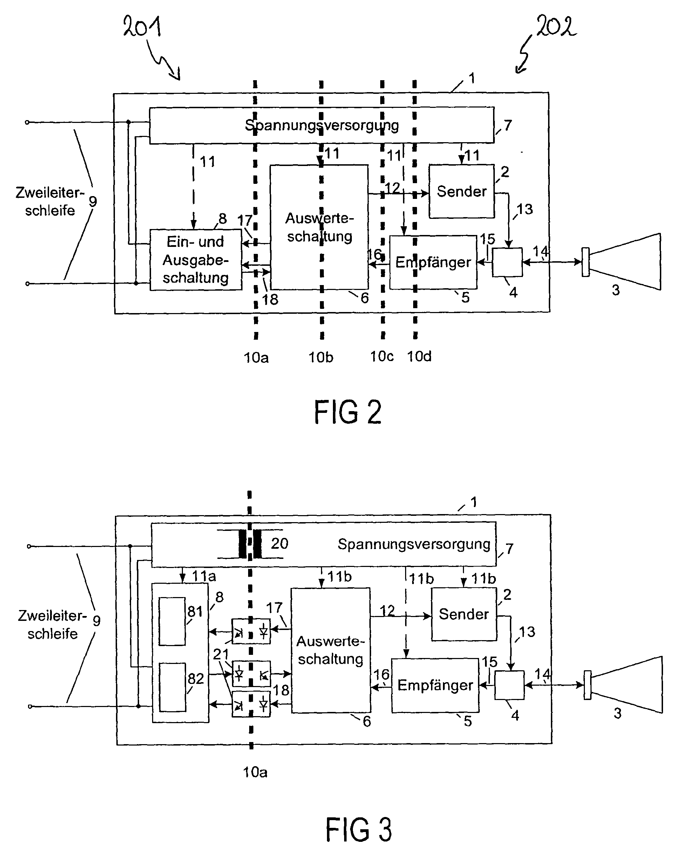

Fig. 2 zeigt eine schematische Darstellung eines Füllstandradars mit Potentialtrennungen 10a, 10b, 10c, 10d gemäß Ausführungsbeispielen der vorliegenden Erfindung. Die Ein- und Ausgabeschaltung 8 ist hierbei immer auf der Zweileiterschleifenseite der Elektronik-Einheit 1 (also innerhalb des ersten Bereichs 201) angeordnet. Der Sender 2 hingegen ist stets auf der anderen Seite (dem zweiten Bereich 202) angeordnet. Mögliche Anordnungen der Potentialtrennung 10 sind durch die unterbrochenen Linien 10a, 10b, 10c und 10d dargestellt.

Die Potentialtrennung 10a erfolgt zwischen der Ein- und Ausgabeschaltung 8 und der Auswerteschaltung 6 durch die Signalleitungen 17 und 18 und durch die Spannungsversorgung 7.

Eine zweite mögliche (alternative) Potentialtrennung 10b erfolgt durch die Auswerteschaltung 6 und durch die Spannungsversorgung 7.

Eine weitere Möglichkeit der Potentialtrennung ist durch die unterbrochene Linie 10c dargestellt. Hier erfolgt die Potentialtrennung zwischen der Auswerteschaltung 6 auf der einen Seite und Sender 2, Empfänger 5 auf der anderen Seite durch die Signalleitungen 12 und 16 und durch die Spannungsversorgung 7.

Die unterbrochene Linie 10d zeigt eine vierte Anordnung der Potentialtrennung durch den Empfänger 5, die Spannungsversorgung 7 und die Signalleitung 12.

Fig. 3 zeigt ein schematisches Blockschaltbild eines Füllstandradars mit Potentialtrennung 10a gemäß einem Ausführungsbeispiel der vorliegenden Erfindung. Wie in Fig. 3 zu erkennen, verläuft die Potentialtrennung 10a durch die Signalleitungen 17 und 18 und durch die Spannungsversorgung 7. Innerhalb der Spannungsversorgung 7 ist ein DC-DC-Wandler mit induktiver Trennung innerhalb der Spannungsversorgung vorgesehen, wie durch Bezugszeichen 20 symbolisiert.

Die Potentialtrennung zwischen der Auswerteschaltung 6 und der Ein- und Ausgabeschaltung 8 erfolgt in den Signalleitungen 17, 18, beispielsweise über Optokoppler 21. Alternativ können auch Übertrager und kapazitive Kopplungen mit Kondensatoren in Hin- und Rückleitung vorgesehen sein.

Die Ein- und Ausgabeschaltung 8 umfasst einen Stromregler 81 zur Regelung des Ausgangsstroms 4...20mA bei Zweileiter-Stromschleife und ggf. ein Modem 82 für die digitale Kommunikation mit Modulator/Demodulator zur Modulation und Demodulation von digital übertragenen Daten.

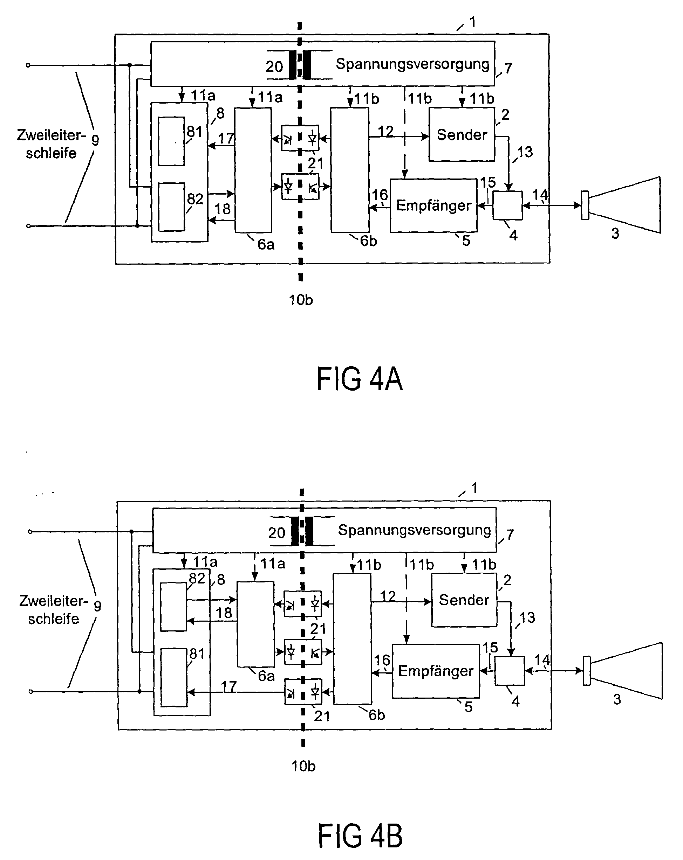

Fig. 4A zeigt ein Blockschaltbild eines Füllstandradars mit Potentialtrennung 10b gemäß einem weiteren Ausführungsbeispiel der vorliegenden Erfindung. Die Potentialtrennung 10b verläuft hierbei durch die Spannungsversorgung 7 hindurch und durch die Auswerteschaltung 6a, 6b. Die beiden Teile 6a, 6b der Auswerteschaltung umfassen jeweils einen eigenen Mikroprozessor. Zwischen den beiden Mikroprozessoren ist jeweils ein Optokoppler 21, eine kapazitive Trennung über Kondensatoren, oder eine andere geeignete Art der Potentialtrennung vorgesehen.

Der erste Teil der Auswerteschaltung 6a wird über die Versorgungsleitung 11a mit Spannung versorgt, der zweite Teil der Auswerteschaltung 6b wird über die Versorgungsleitung 11b mit Spannung versorgt. Die Versorgungsleitungen 11a und 11b befinden sich jeweils in verschiedenen Bereichen der Elektronik-Einheit 1, welche über die Potentialtrennung 10b voneinander getrennt sind.

Fig. 4B zeigt ein Blockschaltbild eines Füllstandradars mit Potentialtrennung 10b gemäß einem weiteren Ausführungsbeispiel der vorliegenden Erfindung. Der Unterschied zu Fig. 4A besteht lediglich darin, dass die Übergabe des Füllstandmesswerts über die Leitung 17 direkt von der Auswerteschaltung 6b zum Stromregler 81 innerhalb der Ein- und Ausgabeschaltung 8 erfolgt und nicht mehr über die Auswerteschaltung 6a führt.

Hintergrund dieser Lösung ist die Umsetzung eines Sicherheitskonzepts nach einer bestehenden Norm (IEC 61 508 / 61 515, Stichwort SIL: "Safety Integrity Level").

Nach diesem Konzept sind alle Fehlerquellen, die zu einer falschen Ausgabe des Füllstandmesswerts führen können, soweit wie möglich auszuschließen. Da hier der Füllstandmesswert direkt von der Auswerteschaltung 6b zur Ausgangsschaltung für den relativen Schleifenstrom 81 übertragen wird, sind alle Fehlerquellen, die aus dem Betrieb der Auswerteschaltung 6a resultieren können, für den Füllstandmesswert ausgeschlossen. Das kann die Betriebssicherheit erhöhen und die Sicherheitsanforderungen bezüglich der Auswerteschaltung 6a und damit den Produktionsaufwand reduzieren.

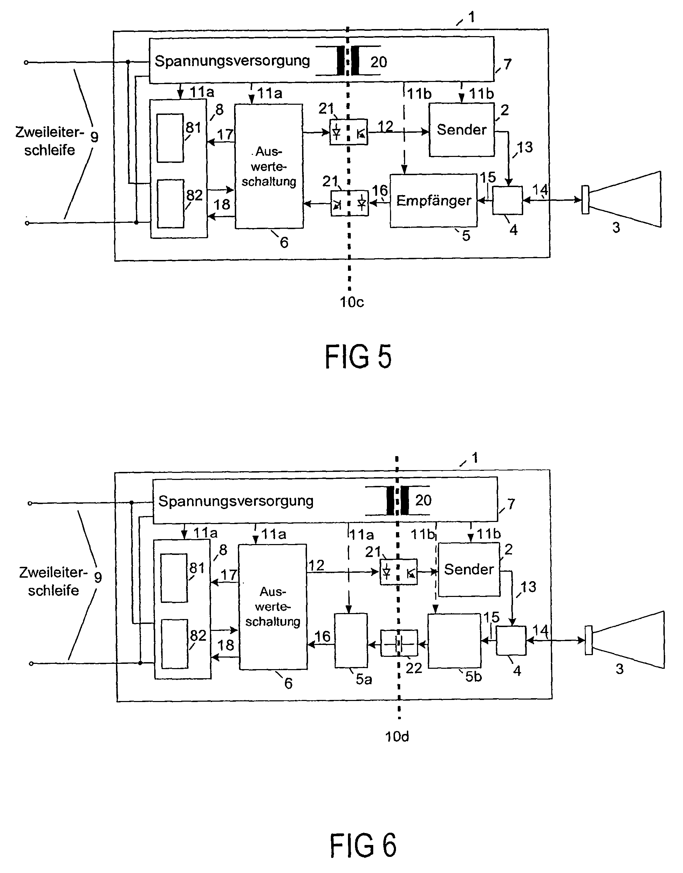

Fig. 5 zeigt ein Blockschaltbild eines Füllstandradars mit Potentialtrennung 10c gemäß einem weiteren Ausführungsbeispiel der vorliegenden Erfindung. Die Potentialtrennung 10c ist hierbei zwischen der Auswerteschaltung 6 und dem Empfänger 5 angeordnet und verläuft zusätzlich durch die Spannungsversorgung 7. Die Leitung 12 zur Aktivierung der Sendeschaltung 2 durch die Auswerteschaltung 6 und die Leitung 16 zur Übergabe des Empfänger-Ausgangssignals an die Auswerteschaltung 6 sind jeweils durch die Optokoppler 21 getrennt. Es können auch Übertrager oder kapazitive Kopplungen vorgesehen sein.

Fig. 6 zeigt ein Blockschaltbild eines Füllstandradars mit Potentialtrennung 10d gemäß einem weiteren Ausführungsbeispiel der vorliegenden Erfindung. Die Potentialtrennung 10d verläuft hierbei durch den Empfänger 5a, 5b und durch die Spannungsversorgung 7. In der Signalleitung 12 wird die Trennung über einen Optokoppler 21 bereitgestellt. Innerhalb des Empfängers 5a, 5b erfolgt die Potentialtrennung über eine kapazitive Potentialtrennung 22. Diese überträgt beispielsweise ein Zwischenfrequenz (ZF)-Signal, welches durch Abtastung und / oder Frequenzumsetzung aus dem Mikrowellen-Empfangssignal erzeugt wurde. Das ZF-Signal ist beispielsweise ein gleichspannungsfreies Wechselspannungssignal mit einer Frequenz im Bereich von einigen kHz bis MHz und lässt sich besonders einfach über Koppelkondensatoren in Hin - und Rückleitung übertragen.

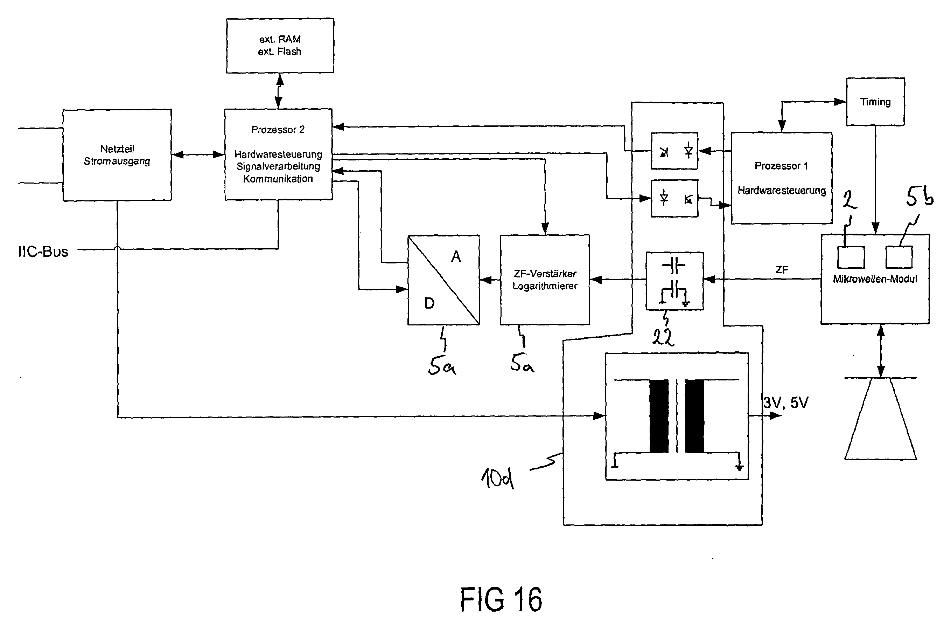

Ein Ausführungsbeispiel, bei dem eine solche Potentialtrennung 10d implementiert ist, ist in Fig. 16 gezeigt.

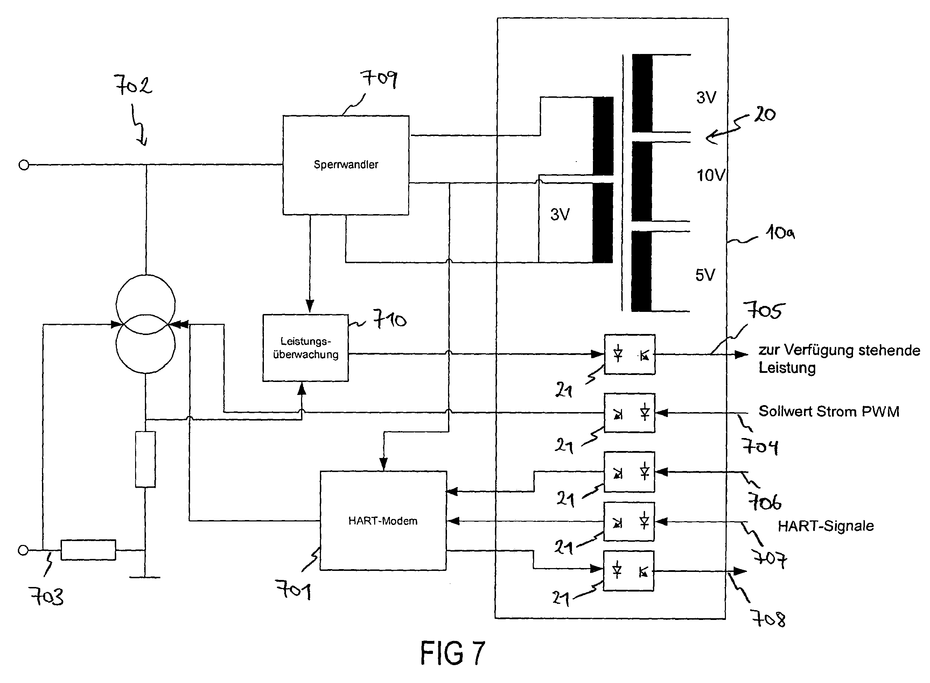

Fig. 7 zeigt eine schematische Darstellung einer Potentialtrennung gemäß Fig. 3 gemäß einem Ausführungsbeispiel der vorliegenden Erfindung. Die Potentialtrennung 10a weist hierbei einen DC-DC-Wandler 20 mit induktiver Trennung innerhalb der Spannungsversorgung und Optokoppler 21 zur Trennung der Signale zwischen Auswerteschaltung 6 und Ein- und Ausgabeschaltung 8 (siehe Fig. 3) auf.

Die Ein- und Ausgabeschaltung 8 umfasst ein HART-Modem 701 zur Realisierung einer digitalen Kommunikation auf der Zweileiterschleife und Stromregler 702, der einerseits den Istwert 703 über den Widerstand in der negativen Zuleitung fühlt und andererseits den Sollwert 704 potential getrennt, z. B. über PWM (Pulsweitenmodulation), von der Auswerteschaltung 6 (nicht dargestellt in Fig. 7) erhält. Die Stromregelung erfolgt parallel zum Sensoreingang, d. h. der parallel fließende Strom wird so geregelt, dass die Summe aller Ströme den einzustellenden Strom 4...20mA ergibt.

Zur optimalen Ausnutzung der verfügbaren Leistung wird ein Signal "zur Verfügung stehende Leistung" 705 erzeugt, um den intermittierenden Betrieb des Sensors durch die Auswerteschaltung optimal gestalten zu können. Dieses Signal 705 ist beispielsweise ein digitales Signal (erzeugt durch einen Komparator), um es auf einfache Art und Weise über die Trennstelle 10a zu übertragen. Ebenso sind die HART-Signale 706, 707, 708 digitale Signale.

Weiterhin sind ein Sperrwandler 709 und eine Leistungsüberwachung 710 vorgesehen. Der Sperrwandler 709 kann hierbei Signale, z.B. ein zur Eingangsspannung des Sperrwandlers proportionales Spannungssignal, an die Leistungsüberwachung 710 übertragen. Die Leistungsüberwachung 710 empfängt zusätzliche Signale, z.B. ein dem parallel fließenden Strom proportionales Signal, von der Parallelstromreglung 702. Aus einem oder mehreren der empfangenen Signale wird dann das Signal "zur Verfügung stehende Leistung" erzeugt.

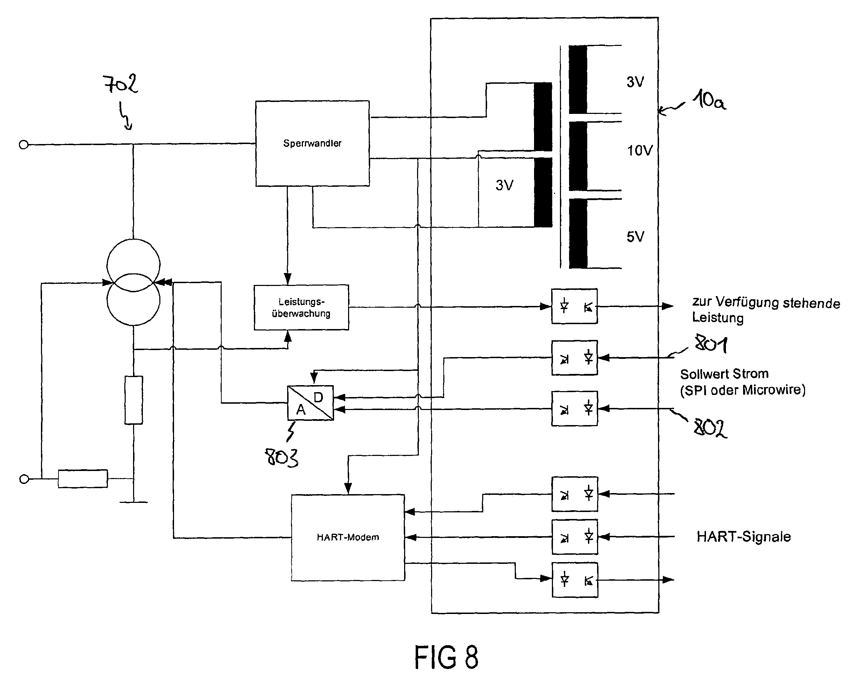

Fig. 8 zeigt ein Blockschaltbild einer Potentialtrennung entsprechend der Fig. 3 gemäß einem weiteren Ausführungsbeispiel der vorliegenden Erfindung. Der Unterschied zu dem in Fig. 7 dargestellten Ausführungsbeispiel liegt in der Übertragung des Messwerts von der Auswerteschaltung zur Ein- und Ausgabeschaltung. Statt PWM-Signal 704 (siehe Fig. 7) wird ein digitales Signal 801, 802 übertragen. Diese Übertragung erfolgt beispielsweise über vordefinierte digitale Zweidrahtschnittstellen SPI oder Microwire. Es sind aber auch andere Schnittstellen möglich.

Weiterhin ist ein Digital/Analog-Wandler 803 vorgesehen, welcher einen analogen Sollwert für den Regler 702 erzeugt.

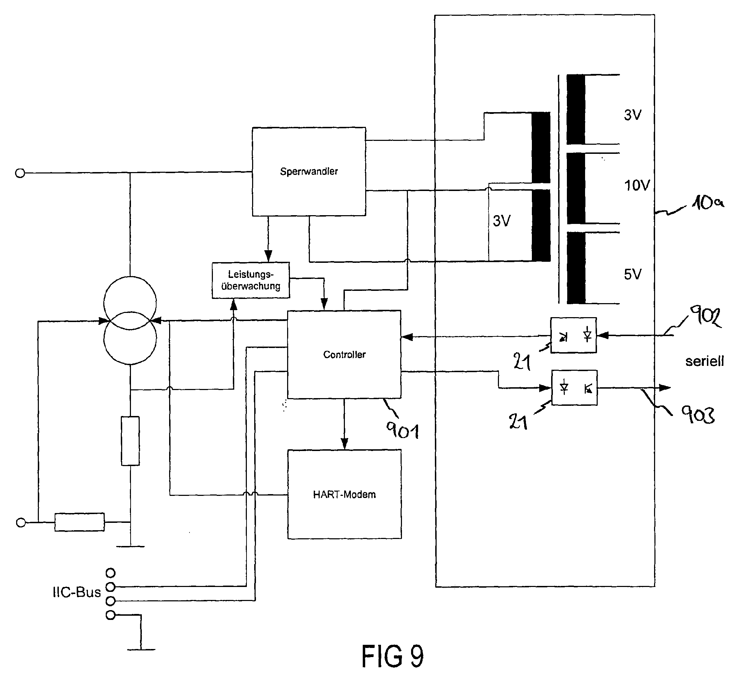

Fig. 9 zeigt ein weiteres Ausführungsbeispiel der Potentialtrennung 10a gemäß Fig. 3. Die Ein- und Ausgabeschaltung 8 enthält einen Mikrocontroller 901, der mit dem Mikrocontroller der Auswerteschaltung 6 (siehe Fig. 3) digital kommuniziert. Die entsprechenden Signale 902, 903 können auf einfache Art und Weise mit Hilfe zweier Optokoppler 21 oder alternativ über eine oder mehrere kapazitive Kopplungen getrennt werden. Außerdem ist eine zusätzliche digitale Schnittstelle am Sensor möglich, wie z. B. eine IIC-Bus-Schnittstelle zur Vorortbedienung des Sensors über beispielsweise eine Anzeige-Bedieneinheit oder einen Laptop.

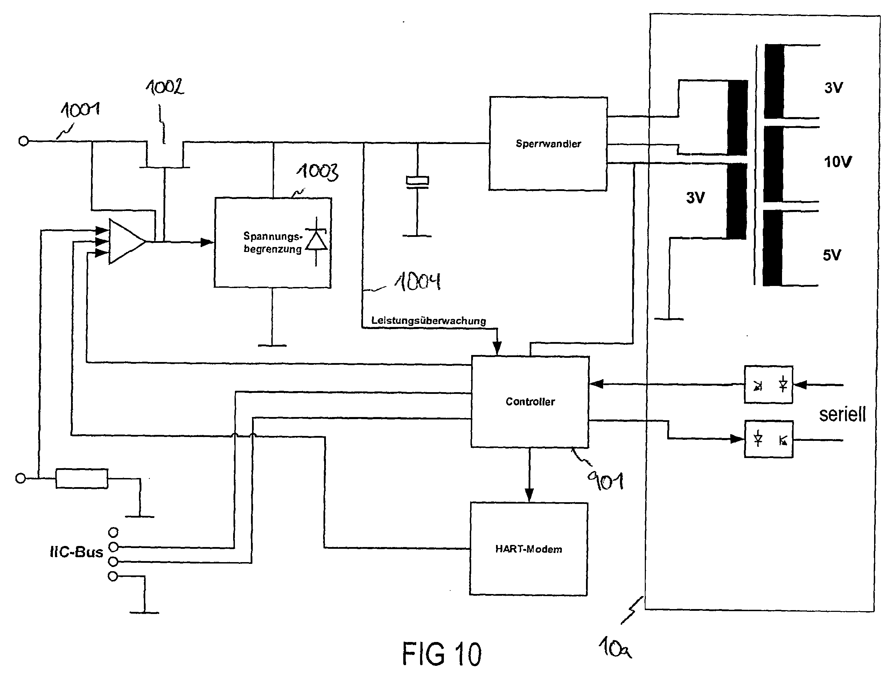

Fig. 10 zeigt ein weiteres Ausführungsbeispiel der Potentialtrennung 10a der Fig. 3. Der Unterschied zu dem in Fig. 9 gezeigten Ausführungsbeispiel liegt in der Art der Stromregelung. Anstelle einer Stromregelung parallel zum Sensoreingang wird hier der Strom durch den längs in der Plusleitung 1001 liegenden Transistor 1002 geregelt. Dies erfordert einen dahinter parallel angeordneten Schaltungsblock 1003 zur Spannungsbegrenzung, über den die vom Sensor nicht benötigte Leistung verbraucht wird. Das Signal 1004 "Leistungsüberwachung" dient wieder der optimalen Ausnutzung der verfügbaren Leistung und wird dem Mikrocontroller 901 zugeführt.

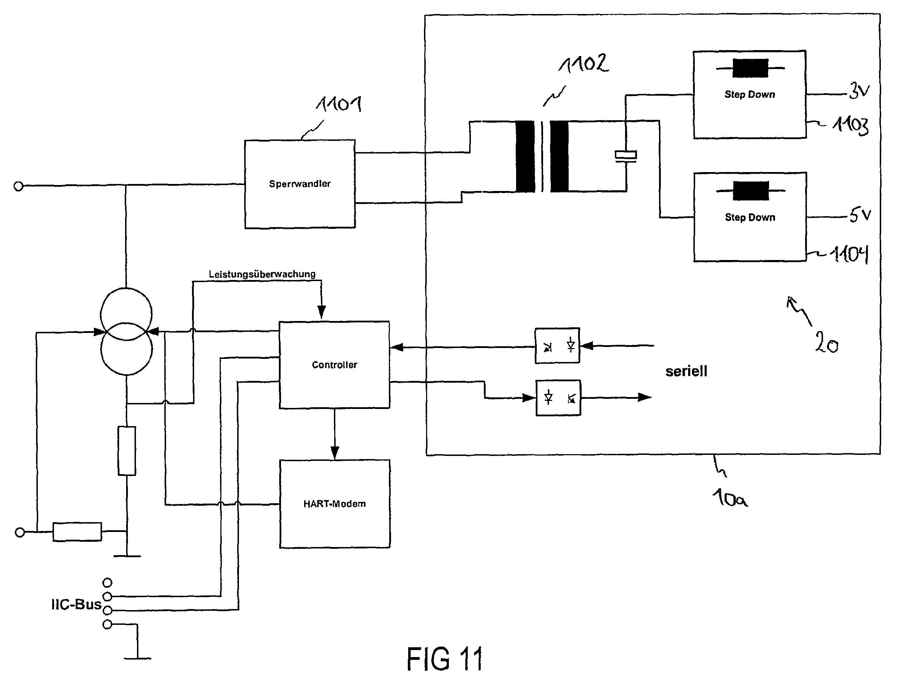

Fig. 11 zeigt ein weiteres Ausführungsbeispiel der Potentialtrennung 10a der Fig. 3. Hier ist der DC-DC-Wandler 20 abgeändert. Ein Sperrwandler 1101 erzeugt nur eine Spannung, welche über die induktive Kopplung 1102 in eine Sekundärspannung umgewandelt wird, wobei es sich hier um einen verhältnismäßig einfachen Trennübertrager handelt. Dahinter erzeugen dann mehrere Step-Down-Wandler 1103, 1104 die verschiedenen Spannungen (von beispielsweise 3 V und 5 V).

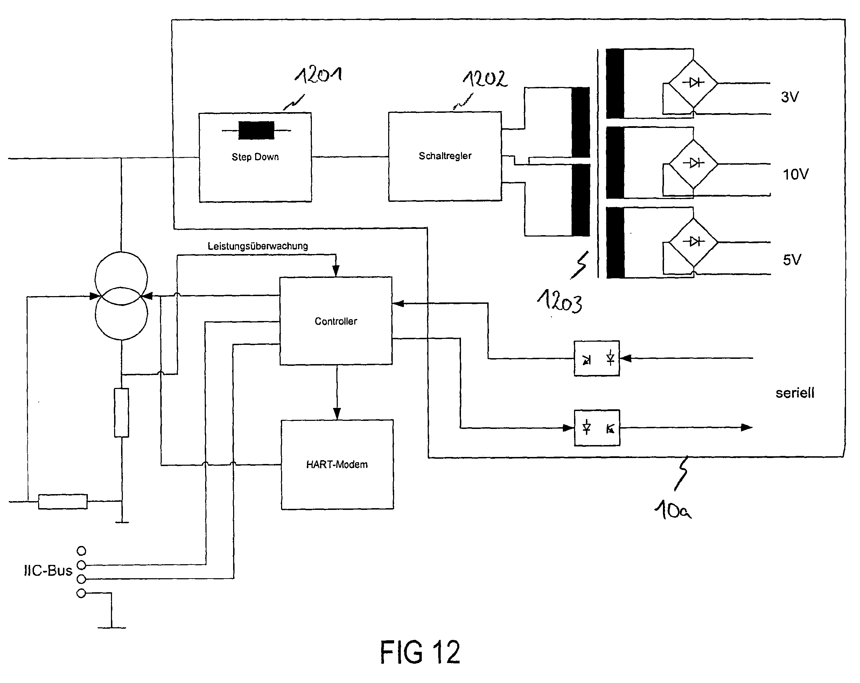

Fig. 12 zeigt ein weiteres Ausführungsbeispiel der Potentialtrennung 10a mit einem anderen Netzteilkonzept als dem in den Figuren 9 bzw. 11 dargestellten. Hier ist ein Step-Down-Wandler 1201 vorgesehen, an welchem ein Schaltregler 1202 angeschlossen ist. Der Schaltregler 1202 umfasst einen Trennübertrager 1203, welcher mehrere Sekundärspannungen (von beispielsweise 3 V, 10 V, 5 V) erzeugt.

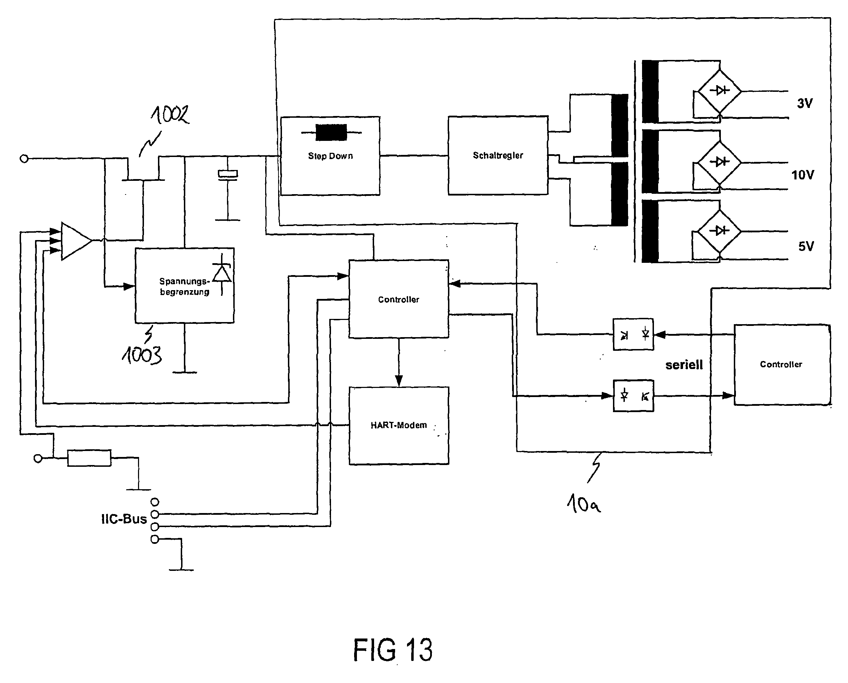

Fig. 13 zeigt ein ähnliches Ausführungsbeispiel wie in Fig. 12, allerdings verläuft die Stromregelung hier nicht parallel, sondern seriell über den Transistor 1002 und die Spannungsbegrenzung 1003 (Fig. 10).

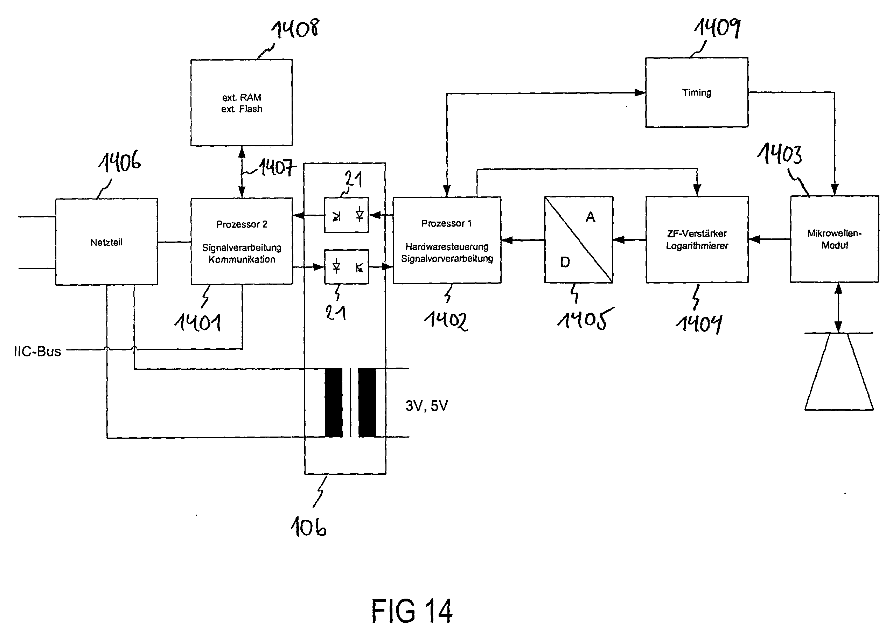

Fig. 14 zeigt ein weiteres Ausführungsbeispiel einer Potentialtrennung entsprechend der Fig. 4A. Es sind hier zwei Prozessoren 1401, 1402 vorgesehen, welche sich auf verschiedenen Seiten der Potentialtrennung 10b befinden und der Auswerteschaltung 6 (siehe Figuren 4A, 4B) angehören. Die beiden Prozessoren 1401, 1402 teilen sich die Signalauswertung. Der Prozessor 1402 übernimmt zusätzlich noch die Hardwaresteuerung, wobei es sich hier beispielsweise um die Organisation des intermittierenden Betriebs und die Kontrolle von Taktschaltungen (Timing) 1409 handelt. Das Mikrowellenmodul 1403 enthält eine Mikrowellensendeschaltung und eine Mikrowellen-Empfangsschaltung. Der ZF-Verstärker und Logarithmierer 1404 und der A/D-Wandler 1405 können ebenfalls zur Empfangsschaltung gezählt werden, verarbeiten aber ein Zwischenfrequenz(ZF)- oder Hüllkurvensignal.

Die Kommunikation der beiden Prozessoren 1401, 1402 untereinander zur Übergabe von Messdaten und zur Weitergabe von Einstellparametern erfolgt über die trennenden Optokoppler 21, oder über entsprechende kapazitive Trennungen oder induktive Übertrager (nicht dargestellt in Fig. 14).

Der zweite Prozessor 1401, welcher für die Signalverarbeitung und die Kommunikation vorgesehen ist, ist an das Netzteil 1406 angeschlossen und kann weiterhin über die Leitung 1407 mit einem externen RAM oder einem externen Flash 1408 kommunizieren.

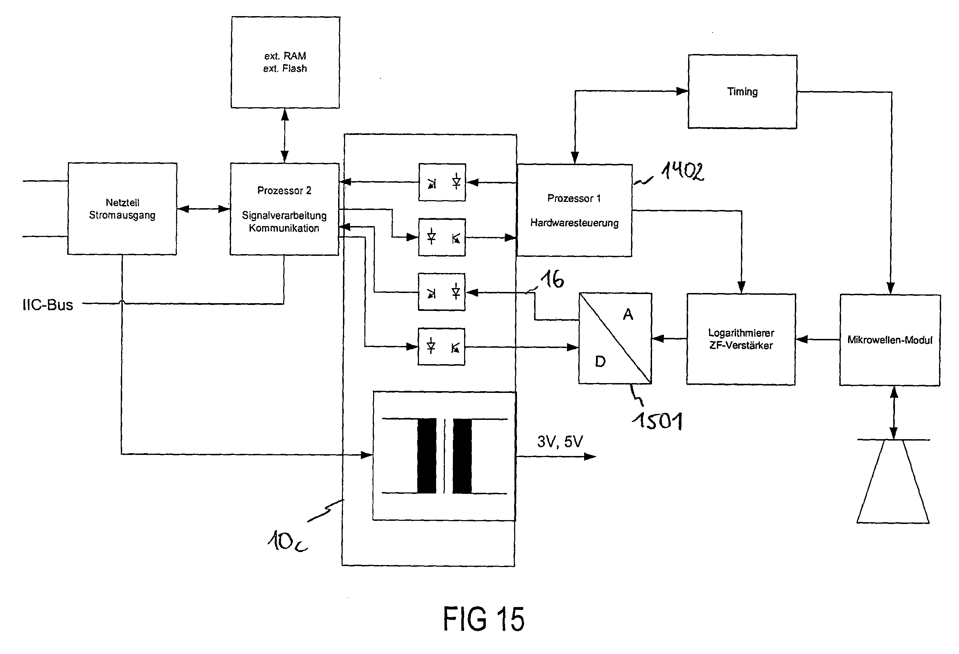

Fig. 15 zeigt ein weiteres Ausführungsbeispiel der vorliegenden Erfindung mit einer Potentialtrennung gemäß Fig. 5. Die Potentialtrennung 10c ist zwischen der Auswerteschaltung 6 und dem Empfänger 5 (siehe Fig. 5) angeordnet. Der Prozessor 1402 dient der Hardwaresteuerung und übernimmt keine Aufgabe der Auswerteschaltung. Er dient lediglich der Hardwaresteuerung von Sende- und Empfangsschaltung. Das Ausgangssignal 16 des Empfängers ist in diesem Fall ein digitales Hüllkurvensignal (digitalisiert durch A/D-Wandler 1501), welches sich gut über die Trennstelle 10c übertragen lässt.

Fig. 16 zeigt ein weiteres Ausführungsbeispiel der Potentialtrennung gemäß einem Ausführungsbeispiel der vorliegenden Erfindung. Die Potentialtrennung 10d erfolgt hierbei innerhalb des Empfängers 5a, 5b. Hier nutzt man den Umstand, dass das ZF-Signal ein gleichspannungsfreies Wechselspannungssignal ist, welches sich optimal durch Kondensatoren 22 trennen lässt.

Ergänzend ist daraufhinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Füllstandradar mit Potentialtrennung zur Messung eines Füllstands in einem Behälter und zum Anschluss an eine Zweileiterschleife (9), das Füllstandradar umfassend:
eine Elektronik-Einheit (1) zum Erzeugen eines Sendesignals, zum Empfangen und Auswerten eines Empfangssignals, und zum Erzeugen und Ausgeben eines Ausgabesignals, das auf dem ausgewerteten Empfangssignal basiert; und
eine Potentialtrennung (10a, 10b, 10c, 10d, 20) innerhalb der Elektronik-Einheit (1) zur galvanischen Trennung von ersten Signalen in einem ersten Bereich (201) der Elektronik-Einheit (1) von zweiten Signalen in einem zweiten Bereich (202) der Elektronik-Einheit (1);
wobei die Elektronik-Einheit (1) eine Ein- und Ausgabeschaltung (8) aufweist, welche zum Regeln und Ausgeben des Ausgabesignals ausgeführt ist und in dem ersten Bereich (201) angeordnet ist;
wobei die Erzeugung des Sendesignals in dem zweiten Bereich (202) erfolgt;
weiter aufweisend eine Spannungsversorgung (7) zum Versorgen der Ein- und Ausgabeschaltung (8) der Elektronik-Einheit (1) mit einem ersten Betriebssignal (11a) und zum Versorgen einer zweiten Elektronikkomponente (2, 5, 6) der Elektronik-Einheit (1) mit einem zweiten Betriebssignal (11b);
wobei die Potentialtrennung (10a, 10b, 10c, 10d, 20) zum Trennen des ersten Betriebssignals (11a) von dem zweiten Betriebssignal (11b) innerhalb der Spannungsversorgung (7) ausgeführt ist, so dass eine durchgängige Potentialtrennung innerhalb der Elektronik-Einheit (1) bereitgestellt wird, welche verschiedene Funktionsbereiche der Elektronik-Einheit inklusive deren Energieversorgung voneinander trennt;
wobei die zweite Elektronikkomponente (2, 5, 6) der Elektronik-Einheit (1) in dem zweiten Bereich angeordnet ist.

2. Füllstandradar nach Anspruch 1,
wobei die Ein- und Ausgabeschaltung (8) zum Entgegennehmen von externen Eingabesignalen ausgeführt ist.

3. Füllstandradar nach Anspruch 1 oder 2,
wobei die Ein- und Ausgabeschaltung (8) zur Regelung eines Ausgangsstroms der Zweileiterschleife (9) ausgeführt ist.

4. Füllstandradar nach Anspruch 2 oder 3,
wobei das Ausgabesignal ein digitales Ausgabesignal ist;
wobei die Ein- und Ausgabeschaltung (8) weiterhin zur Modulation des digitalen Ausgabesignals und zur Demodulation eines digitalen Eingangsignals ausgeführt ist.

5. Füllstandradar nach einem der vorhergehenden Ansprüche,
wobei die Potentialtrennung (10a, 10b, 10c, 10d, 20) eine induktive Trennung (20) innerhalb der Spannungsversorgung (7) umfasst.

6. Füllstandradar nach einem der vorhergehenden Ansprüche, die Elektronik-Einheit (1) weiterhin umfassend:
eine Auswerteschaltung (6) zum Auswerten des Empfangssignals.

7. Füllstandradar nach einem der vorhergehenden Ansprüche,
wobei die Potentialtrennung (10a, 10b, 10c, 10d, 20) zur Trennung digitaler Signale ausgeführt ist.

8. Füllstandradar nach einem der vorhergehenden Ansprüche,
wobei die Potentialtrennung (10a, 10b, 10c, 10d, 20) zur Trennung gleichspannungsfreier Wechselsignale ausgeführt ist.

9. Füllstandradar nach einem der vorhergehenden Ansprüche,
wobei die Potentialtrennung (10b) innerhalb der Auswerteschaltung (6a, 6b) erfolgt.

10. Füllstandradar nach einem der vorhergehenden Ansprüche,
wobei die Potentialtrennung (10c) zwischen der Auswerteschaltung (6), die im ersten Bereich (201) angeordnet ist, und Empfänger (5), der im zweiten Bereich (202) angeordnet ist, erfolgt.

11. Füllstandradar nach einem der vorhergehenden Ansprüche,
wobei die Potentialtrennung (10b) innerhalb des Empfängers (5a, 5b) erfolgt.

12. Verfahren zum Messen eines Füllstands, das Verfahren umfassend die Schritte:
Erzeugen eines Sendesignals;
Empfangen und Auswerten eines Empfangssignals;
Erzeugen und Ausgeben eines Ausgabesignals, das auf dem ausgewerteten Empfangssignal basiert;
Trennen von ersten Signalen in einem ersten Bereich (201) der Elektronik-Einheit (1) von zweiten Signalen in einem zweiten Bereich (202) der Elektronik-Einheit (1) durch eine Potentialtrennung (10a, 10b, 10c, 10d, 20) innerhalb der Elektronik-Einheit (1);
Trennen eines ersten Betriebssignals (11a) von einem zweiten Betriebssignal (11b) durch die Potentialtrennung (10a, 10b, 10c, 10d, 20) innerhalb der Spannungsversorgung (7), so dass eine durchgängige Potentialtrennung innerhalb der Elektronik-Einheit (1) bereitgestellt wird, welche verschiedene Funktionsbereiche der Elektronik-Einheit inklusive deren Energieversorgung voneinander trennt; und
Ausgeben des Ausgabesignals durch eine Ein- und Ausgabeschaltung (8), welche in dem ersten Bereich (201) angeordnet ist; und
wobei das Erzeugen des Sendesignals in dem zweiten Bereich (202) erfolgt;
wobei die zweite Elektronikkomponente (2, 5, 6) der Elektronik-Einheit (1) in dem zweiten Bereich angeordnet ist.

13. Verfahren nach Anspruch 12, das Verfahren weiterhin umfassend die Schritte:
Entgegennehmen von externen Eingabesignalen;
Regelung eines Ausgangsstroms einer Zweileiterschleife (9) durch die Ein- und Ausgabeschaltung (8).

14. Verfahren nach Anspruch 12 oder 13,
wobei die Ein- und Ausgabeschaltung (8) weiterhin zur Modulation eines digitalen Ausgabesignals und zur Demodulation eines digitalen Eingangsignals ausgeführt ist.

## Claims

1. Fill level radar having potential isolation for measuring a fill level in a container and for connection to a two-wire loop (9), the fill level radar comprising:
an electronics unit (1) for generating a transmission signal, for receiving and evaluating a received signal, and for generating and emitting an output signal that is based on the evaluated received signal; and
a potential isolation (10a, 10b, 10c, 10d, 20) within the electronics unit (1) for galvanically isolating first signals in a first region (201) of the electronics unit (1) from second signals in a second region (202) of the electronics unit (1);
wherein the electronics unit (1) has an input and output circuit (8) which is designed to control and emit the output signal and which is arranged in the first region (201);
wherein the transmission signal is generated in the second region (202);
further comprising a voltage supply (7) for supplying the input and output circuit (8) of the electronics unit (1) with a first operating signal (11a) and for supplying a second electronics component (2, 5, 6) of the electronics unit (1) with a second operating signal (11b);
wherein the potential isolation (10a, 10b, 10c, 10d, 20) is designed to isolate the first operating signal (11 a) from the second operating signal (11b) within the voltage supply (7) such that a continuous potential isolation is provided within the electronics unit (1), which isolates different functional regions of the electronics unit, including the power supply thereof, from one another;
wherein the second electronics component (2, 5, 6) of the electronics unit (1) is arranged in the second region.

2. Fill level radar according to claim 1,
wherein the input and output circuit (8) is designed to receive external input signals.

3. Fill level radar according to either claim 1 or claim 2,
wherein the input and output circuit (8) is designed to control an output current of the two-wire loop (9).

4. Fill level radar according to either claim 2 or claim 3,
wherein the output signal is a digital output signal;
wherein the input and output circuit (8) is further designed to modulate the digital output signal and to demodulate a digital input signal.

5. Fill level radar according to any of the preceding claims,
wherein the potential isolation (10a, 10b, 10c, 10d, 20) includes an inductive isolation (20) within the voltage supply (7).

6. Fill level radar according to any of the preceding claims, the electronics unit (1) further comprising:
an evaluation circuit (6) for evaluating the received signal.

7. Fill level radar according to any of the preceding claims,
wherein the potential isolation (10a, 10b, 10c, 10d, 20) is designed to isolate digital signals.

8. Fill level radar according to any of the preceding claims,
wherein the potential isolation (10a, 10b, 10c, 10d, 20) is designed to isolate DC voltage-free AC signals.

9. Fill level radar according to any of the preceding claims,
wherein the potential isolation (10b) takes place within the evaluation circuit (6a, 6b).

10. Fill level radar according to any of the preceding claims,
wherein the potential isolation (10c) takes place between the evaluation circuit (6), which is arranged in the first region (201), and the receiver (5), which is arranged in the second region (202).

11. Fill level radar according to any of the preceding claims,
wherein the potential isolation (10b) takes place within the receiver (5a, 5b).

12. Method for measuring a fill level, the method comprising the steps of:
generating a transmission signal;
receiving and evaluating a received signal;
generating and emitting an output signal that is based on the evaluated received signal;
isolating first signals in a first region (201) of the electronics unit (1) from second signals in a second region (202) of the electronics unit (1) using a potential isolation (10a, 10b, 10c, 10d, 20) within the electronics unit (1);
isolating a first operating signal (11a) from a second operating signal (11b) using the potential isolation (10a, 10b, 10c, 10d, 20) within the voltage supply (7) such that a continuous potential isolation is provided within the electronics unit (1), which isolates different functional regions of the electronics unit, including the power supply thereof, from one another; and
emitting the output signal using an input and output circuit (8) that is arranged in the first region (201); and
wherein the transmission signal is generated in the second region (202);
wherein the second electronics component (2, 5, 6) of the electronics unit (1) is arranged in the second region.

13. Method according to claim 12, the method further comprising the steps of:
receiving external input signals;
controlling an output current of a two-wire loop (9) using the input and output circuit (8).

14. Method according to either claim 12 or claim 13,
wherein the input and output circuit (8) is further designed to modulate a digital output signal and to demodulate a digital input signal.

## Revendications

1. Radar de niveau avec séparation de potentiel pour la mesure d'un niveau dans un récipient et pour le raccordement à une boucle à deux conducteurs (9), le radar de niveau comprenant :
une unité électronique (1), destinée à générer un signal d'émission, à recevoir et à évaluer un signal de réception, et à générer et sortir un signal de sortie, basé sur le signal de réception évalué ; et
une séparation de potentiel (10a, 10b, 10c, 10d, 20) à l'intérieur de l'unité électronique (1) pour la séparation galvanique de premiers signaux dans une première zone (201) de l'unité électronique (1) de seconds signaux dans une seconde zone (202) de l'unité électronique (1) ;
l'unité électronique (1) présentant un circuit d'entrée et de sortie (8), réalisé pour le réglage et la sortie du signal de sortie et disposé dans la première zone (201) ;
la génération du signal d'émission s'effectuant dans la seconde zone (202) ;
comprenant en outre une alimentation en tension (7) pour l'alimentation du circuit d'entrée et de sortie (8) de l'unité électronique (1) par un premier signal de fonctionnement (11a) et pour l'alimentation d'un second composant électronique (2, 5, 6) de l'unité électronique (1) par un second signal de fonctionnement (11b) ;
la séparation de potentiel (10a, 10b, 10c, 10d, 20) pour séparer le premier signal de fonctionnement (11a) du second signal de fonctionnement (11b) étant réalisée à l'intérieur de l'alimentation en tension (7), de sorte qu'une séparation de potentiel continue est fournie à l'intérieur de l'unité électronique (1), laquelle séparation sépare les unes des autres différentes zones fonctionnelles de l'unité électronique, y compris leur alimentation en énergie ;
le second composant électronique (2, 5, 6) de l'unité électronique (1) étant disposé dans la seconde zone.

2. Radar de niveau selon la revendication 1,
le circuit d'entrée et de sortie (8) étant réalisé pour l'acceptation de signaux d'entrée externes.

3. Radar de niveau selon l'une des revendications 1 et 2,
le circuit d'entrée et de sortie (8) étant réalisé pour régler un courant de sortie de la boucle à deux conducteurs (9).

4. Radar de niveau selon l'une des revendications 2 et 3,
le signal de sortie étant un signal de sortie numérique ;
le circuit d'entrée et de sortie (8) étant réalisé en outre pour la modulation du signal de sortie numérique et pour la démodulation d'un signal d'entrée numérique.

5. Radar de niveau selon l'une des revendications précédentes,
la séparation de potentiel (10a, 10b, 10c, 10d, 20) comprenant une séparation inductive (20) à l'intérieur de l'alimentation en tension (7).

6. Radar de niveau selon l'une des revendications précédentes, l'unité électronique (1) comprenant en outre :
un circuit d'évaluation (6) pour l'évaluation du signal de réception.

7. Radar de niveau selon l'une des revendications précédentes,
la séparation de potentiel (10a, 10b, 10c, 10d, 20) étant réalisée pour la séparation de signaux numériques.

8. Radar de niveau selon l'une des revendications précédentes,
la séparation de potentiel (10a, 10b, 10c, 10d, 20) étant réalisée pour la séparation de signaux alternatifs exempts de tension continue.

9. Radar de niveau selon l'une des revendications précédentes,
la séparation de potentiel (10b) s'effectuant à l'intérieur du circuit d'évaluation (6a, 6b).

10. Radar de niveau selon l'une des revendications précédentes,
la séparation de potentiel (10c) s'effectuant entre le circuit d'évaluation (6), disposé dans la première zone (201), et le récepteur (5), disposé dans la seconde zone (202).

11. Radar de niveau selon l'une des revendications précédentes,
la séparation de potentiel (10b) s'effectuant à l'intérieur du récepteur (5a, 5b).

12. Procédé de mesure d'un niveau, le procédé comprenant les étapes suivantes :
génération d'un signal d'émission ;
réception et évaluation d'un signal de réception ;
génération et sortie d'un signal de sortie, basé sur le signal de réception évalué ;
séparation de premiers signaux dans une première zone (201) de l'unité électronique (1) de seconds signaux dans une seconde zone (202) de l'unité électronique (1) par une séparation de potentiel (10a, 10b, 10c, 10d, 20) à l'intérieur de l'unité électronique (1) ;
séparation d'un premier signal de fonctionnement (11a) d'un second signal de fonctionnement (11b) par la séparation de potentiel (10a, 10b, 10c, 10d, 20) à l'intérieur de l'alimentation en tension (7), de sorte qu'une séparation de potentiel continue est fournie à l'intérieur de l'unité électronique (1), laquelle séparation sépare les unes des autres différentes zones fonctionnelles de l'unité électronique, y compris leur alimentation en énergie ; et
sortie du signal de sortie par un circuit d'entrée et de sortie (8), disposé dans la première zone (201) ; et
la génération du signal d'émission s'effectuant dans la seconde zone (202) ;
le second composant électronique (2, 5, 6) de l'unité électronique (1) étant disposé dans la seconde zone.

13. Procédé selon la revendication 12, comprenant en outre les étapes :
acceptation de signaux d'entrée externes ;
réglage d'un courant de sortie d'une boucle à deux conducteurs (9) par le circuit d'entrée et de sortie (8).

14. Procédé selon l'une des revendications 12 et 13,
le circuit d'entrée et de sortie (8) étant en outre réalisé pour la modulation d'un signal de sortie numérique et pour la démodulation d'un signal d'entrée numérique.
